# FASCICULE DE BREVET EUROPEEN

(11) **EP 4 081 758 B1**
(45) Date de publication et mention de la délivrance du brevet: **31.01.2024**
(21) Numéro de dépôt: 20845405.8
(22) Date de dépôt: 14.12.2020
(51) Int. Cl.: G01B 11/25, G06T 7/557, G06T 7/521

(54) **SYSTÈME ET PROCÉDÉ DE DÉTERMINATION DU PROFIL TRIDIMENSIONNEL D'UNE SURFACE PAR CAMÉRA PLÉNOPTIQUE ET ÉCLAIRAGE STRUCTURÉ**
SYSTEM UND VERFAHREN ZUR BESTIMMUNG DES DREIDIMENSIONALEN PROFILS EINER OBERFLÄCHE UNTER VERWENDUNG EINER PLENOPTISCHEN KAMERA UND STRUKTURIERTER BELEUCHTUNG
SYSTEM AND METHOD FOR DETERMINING THE THREE-DIMENSIONAL PROFILE OF A SURFACE USING A PLENOPTIC CAMERA AND STRUCTURED LIGHTING

(30) Priorité: 24.12.2019 FR 1915556
(43) Date de publication de la demande: 02.11.2022
(73) Titulaire: SAFRAN, 75015 Paris (FR)
(72) Inventeur: MICHAUD, Franck, 77550 Moissy-Cramayel (FR); BENAICHOUCHE, Ahmed Nasreddinne, 77550 Moissy-Cramayel (FR)
(74) Mandataire: Brevalex
(86) Numéro de dépôt international: PCT/FR2020/052408
(87) Numéro de publication internationale: WO 2021/130425

(56) Documents cités:
- US-A1- 2014 078 264
- US-A1- 2016 202 048
- ZEWEI CAI ET AL: "Structured light field 3D imaging", OPTICS EXPRESS, vol. 24, no. 18, 25 août 2016 (2016-08-25) , page 20324, XP055730040, DOI: 10.1364/OE.24.020324

## Description

### DOMAINE TECHNIQUE

L'invention se situe dans le domaine de la détermination du profil tridimensionnel d'une surface. Elle concerne un système de détermination d'un tel profil comprenant un système d'éclairage agencé pour projeter un éclairage structuré sur cette surface, une caméra plénoptique agencée pour acquérir des images plénoptiques de la surface et une unité de traitement agencée pour reconstruire une information de profondeur à partir des images acquises par la caméra plénoptique. L'invention concerne également un procédé de détermination du profil tridimensionnel d'une surface.

L'invention s'applique notamment au contrôle et à l'inspection de la surface d'une pièce en environnement industriel mais trouve également des applications dans d'autres domaines impliquant la détermination du profil tridimensionnel d'une ou plusieurs surfaces d'un objet, tels que la vidéosurveillance ou l'assistance à la conduite d'un véhicule.

### ÉTAT DE LA TECHNIQUE ANTÉRIEURE

Le contrôle de la qualité d'une pièce mécanique est une problématique usuelle de l'industrie manufacturière. Ce type de contrôle peut notamment être réalisé à l'aide de capteurs ultrasonores, de palpeurs ou encore par traitement d'images. Le contrôle peut notamment avoir pour objectif la vérification qu'une surface de la pièce mécanique reproduit un profil souhaité avec une marge de tolérance prédéterminée. À cet effet, un contrôle reposant sur un traitement d'images comprend typiquement une acquisition d'un couple d'images stéréoscopiques, une mise en correspondance entre les pixels des images stéréoscopiques par recherche de similarités de forme dans les images, et une détermination d'une information de profondeur par triangulation en fonction des positions respectives des pixels dans les images.

À la place d'un système d'acquisition d'images stéréoscopiques, il est également possible d'utiliser une caméra plénoptique générant une pluralité d'images sous des angles de vue distincts. Une caméra plénoptique présente un compromis intéressant entre la performance de la mesure et la compacité du système. Néanmoins, la détermination de l'information de profondeur repose encore sur un appariement de pixels entre deux images ou plus par recherche de similarités de forme. Or le processus de recherche de similarités de forme demande d'importantes ressources de calcul et peut s'avérer particulièrement compliqué voire impossible pour des surfaces présentant peu ou pas de singularités, par exemple des variations de forme, de couleur ou de texture. Une solution pour faciliter la mise en correspondance des images consiste à ajouter des marqueurs physiques sur l'objet à contrôler. Néanmoins, cette solution est contraignante puisqu'elle implique la mise en place et le retrait éventuel de ces marqueurs physiques. En outre, elle n'est pas toujours applicable selon les objets à contrôler.

Une autre solution pour faciliter la mise en correspondance des images consiste à associer l'acquisition des images à un éclairage spécifique. La méthode de mesure est alors appelée « méthode de mesure active ». Elle consiste à projeter sur l'objet un éclairage structuré connu et à rechercher des similarités spatiales ou de phases liées à cet éclairage structuré. Il est notamment possible de projeter des franges par interférométrie laser ou par un projecteur vidéo, ou encore de générer un ensemble de motifs avec une répartition spatiale régulière ou pseudo aléatoire. Néanmoins, ces techniques impliquent toujours un processus de recherche de similarités spatiales coûteux en ressources de calcul. En outre, une caméra plénoptique présente un nombre élevé de sous-ouvertures et les motifs de l'éclairage doivent alors être très peu redondants afin de ne pas causer d'ambiguïté de mise en correspondance des pixels. En pratique, les méthodes de mesure active sont difficilement exploitables avec une caméra plénoptique.

L'article Zewei Cai ET AL: "Structured light field 3D imaging", Optics Express, vol. 24, no. 18, 25 août 2016 propose une méthode d'imagerie de champ lumineux sous éclairage structuré pour traiter l'imagerie 3D à gamme dynamique élevée. Des motifs de franges sont projetés sur une scène et modulés par la profondeur de la scène, puis un champ lumineux structuré est détecté à l'aide de dispositifs d'enregistrement du champ lumineux. Le champ lumineux structuré contient des informations sur la direction des rayons et la profondeur codée en phase, ce qui permet d'estimer la profondeur de la scène à partir de différentes directions. L'estimation multidirectionnelle de la profondeur permet d'obtenir une imagerie 3D hautement dynamique et efficace. L'article analyse et dérive le mappage phase-profondeur dans le champ lumineux structuré et propose ensuite une approche d'étalonnage flexible basée sur les rayons pour déterminer les coefficients de mappage indépendants pour chaque rayon.

Compte tenu de ce qui précède, l'invention a pour objectif de fournir une méthode de détermination du profil tridimensionnel d'une surface à l'aide d'une caméra plénoptique qui soit simple et robuste. L'invention a encore pour objectif de fournir un système de détermination du profil tridimensionnel d'une surface dont les coûts de conception, de fabrication et de maintenance sont compatibles avec une utilisation à échelle industrielle.

### EXPOSÉ DE L'INVENTION

À cet effet, l'invention repose sur la projection d'une image structurée évolutive sur la surface dont on souhaite déterminer le profil, l'acquisition d'une séquence d'images plénoptiques de la surface et la recherche de similarités temporelles entre pixels de différentes sous-images constituant les images plénoptiques.

Plus précisément, l'invention a pour objet un système de détermination du profil tridimensionnel d'une surface comprenant :
▪ une caméra plénoptique agencée pour acquérir une séquence d'images plénoptiques de la surface, chaque image plénoptique étant formée d'un ensemble de pixels associés chacun à une intensité lumineuse d'un élément de surface imagé, et comprenant une pluralité de sous-images de la surface selon des angles de vue distincts,
▪ un système d'éclairage agencé pour projeter sur la surface une séquence d'images structurées synchronisée avec la séquence d'images plénoptiques, de sorte que chaque élément de surface imagé soit éclairé par une suite d'intensités lumineuses distincte des suites d'intensités lumineuses éclairant les autres éléments de surface imagés, et
▪ une unité de traitement agencée pour construire, pour chaque pixel de l'image plénoptique, un vecteur d'intensité représentatif de la suite d'intensités lumineuses de l'élément de surface imagé correspondant au pixel considéré, et pour appairer chaque pixel d'une sous-image avec un pixel d'une autre sous-image en fonction d'une similarité de leurs vecteurs d'intensité.

En faisant varier les images structurées au cours de la séquence, l'intensité lumineuse projetée sur les éléments de surface imagés, et donc l'intensité lumineuse réfléchie par ces éléments de surface imagés, varient également. Il est donc possible de faire en sorte que chaque élément de surface imagé reflète une intensité lumineuse variant de façon unique par rapport aux autres éléments de surface imagés. La séquence d'images plénoptiques est synchronisée avec la séquence d'images structurées. Autrement dit, chaque image plénoptique est acquise au cours de la projection d'une image structurée. Ainsi, au cours d'une séquence, l'évolution de l'intensité lumineuse d'un pixel est nécessairement distincte de l'évolution de l'intensité lumineuse d'un autre pixel dès lors que ces deux pixels sont associés à des éléments de surface imagés différents. Au contraire, des pixels présentant une évolution identique ou similaire de leur intensité lumineuse indique que ces pixels sont associés à un même élément de surface imagé.

Le nombre d'images plénoptique et d'images structurées dans une séquence, noté N, dépend notamment du nombre de pixels dans les sous-images. Plus le nombre de pixels est élevé et plus N doit être grand. De préférence, N est supérieur ou égal à 10. À titre d'exemple, pour des sous-images formées chacune d'une matrice de 100 pixels par 100 pixels, N peut notamment être supérieur ou égal à 50 ou supérieur ou égal à 100.

Selon une forme particulière de réalisation, le système d'éclairage est agencé pour que chaque image structurée soit formée d'un ensemble de motifs projetés présentant une répartition aléatoire d'intensité lumineuse. Une répartition aléatoire d'intensité lumineuse implique qu'il n'existe aucune périodicité ou pseudo-périodicité des motifs projetés selon une direction quelconque ou dans le plan.

Le système d'éclairage peut comporter :
▪ un masque de transmission formé d'un ensemble de motifs présentant chacun un coefficient de transmission pouvant prendre au moins l'une de deux valeurs distinctes, et
▪ une source lumineuse agencée pour éclairer la surface par projection au travers du masque de transmission.

Les motifs du masque de transmission présentent par exemple des dimensions de l'ordre de 10 µm (micromètres). Chaque motif peut notamment se présenter sous forme de rectangle ou de carré. L'ensemble de motifs se présente par exemple sous forme d'une matrice agencée en lignes et en colonnes.

De préférence, le système d'éclairage est agencé de sorte que les motifs présentent chacun des dimensions inférieures aux dimensions des éléments de surface imagés.

Chaque motif du masque de transmission peut présenter un coefficient de transmission pouvant prendre la valeur zéro ou un, c'est-à-dire bloquer complètement l'énergie d'un faisceau lumineux ou la laisser entièrement passer. Le coefficient de transmission peut également prendre une première valeur comprise entre 0 et 20% et une deuxième valeur comprise entre 80% et 100%. Le masque de transmission présente par exemple un coefficient de transmission global égal à 50%.

Alternativement, chaque motif du masque de transmission peut présenter un coefficient de transmission pouvant prendre une pluralité de valeurs, par exemple 8, 64, 128 ou 256 valeurs.

Selon une forme particulière de réalisation, le système d'éclairage comporte, en outre, un dispositif de déplacement agencé pour déplacer le masque de transmission et/ou la source lumineuse par rapport à la surface, de façon à projeter les différentes images structurées de la séquence.

La source lumineuse peut être une source ponctuelle. Il est alors possible de la déplacer seule pour obtenir les différentes images structurées. Elle peut également prendre la forme d'un rétroéclairage. En particulier, elle peut comporter une matrice de diodes électroluminescentes. Lorsque la source lumineuse présente une étendue supérieure à celle couverte par le masque de transmission dans les positions associées aux différentes images structurées de la séquence, la source lumineuse n'est pas nécessairement déplacée.

Dans un mode particulier de réalisation, le dispositif de déplacement comporte :
▪ un support agencé pour recevoir le masque de transmission, et
▪ une platine de positionnement agencée pour déplacer le support selon au moins un axe de rotation ou de translation.

Le support peut notamment comporter un cadre à l'intérieur duquel le masque de transmission peut être positionné et fixé.

La platine de positionnement est par exemple agencée pour déplacer le support selon un axe de rotation parallèle à un axe de projection de la source lumineuse. L'axe de rotation est de préférence excentré par rapport à un centre du masque de transmission. Alternativement, la platine de positionnement peut être agencée pour déplacer le support selon un premier axe de translation et un deuxième axe de translation, les premier et deuxième axes de translation définissant un plan perpendiculaire à l'axe de projection de la source lumineuse.

Toujours dans un mode particulier de réalisation, les motifs du masque de transmission présentent une première dimension selon un premier axe et une deuxième dimension selon un deuxième axe, et le dispositif de déplacement est agencé pour déplacer le masque de transmission et/ou la source lumineuse, entre deux images structurées successives, d'un pas de déplacement supérieur ou égal à la plus grande des première et deuxième dimensions. De préférence, le pas de déplacement est supérieur ou égal à deux fois la plus grande des première et deuxième dimensions.

Selon une forme particulière de réalisation, chaque motif du masque de transmission comprend des cristaux liquides, le système d'éclairage comportant, en outre, un ensemble d'électrodes agencées de part et d'autre des motifs et une unité de commande agencée pour alimenter les électrodes de façon à contrôler individuellement le coefficient de transmission de chaque motif. Le masque de transmission forme alors un écran à cristaux liquides. Cette forme particulière de réalisation peut éventuellement être combinée à celle selon laquelle le système d'éclairage comporte un dispositif de déplacement pour déplacer le masque de transmission. Les images plénoptiques sont alors formées en fonction du coefficient de transmission de chaque motif et en fonction de la position du masque de transmission par rapport à la surface.

De préférence, la source lumineuse est monochromatique. La source lumineuse émet par exemple un faisceau à une longueur d'onde de 405 nm (nanomètres), 465 nm, 525 nm ou 625 nm. Une source lumineuse monochromatique permet d'éviter la dispersion chromatique et donc d'obtenir des motifs projetés présentant des contours nets.

De façon préférentielle également, la source lumineuse est non cohérente ou à faible cohérence temporelle. Une source lumineuse cohérente est susceptible de générer des tavelures sur la surface éclairée. Ces tavelures s'ajoutent alors aux motifs projetés et risquent de perturber leur reconnaissance.

Selon une forme particulière de réalisation, la caméra plénoptique comporte :
▪ un capteur photosensible comprenant un ensemble d'éléments sensibles, et
▪ un ensemble de microlentilles, chaque microlentille étant associée à un sous-ensemble d'éléments sensibles du capteur photosensible de façon à ce que chaque sous-ensemble d'éléments sensibles puisse générer une sous-image.

Les éléments sensibles du capteur photosensibles sont par exemple agencés sous forme de lignes et de colonnes. De même, les microlentilles peuvent être agencées sous forme de lignes et de colonnes. À titre d'exemple, le capteur photosensible peut comporter 15000 lignes par 15000 colonnes de capteurs photosensibles et 150 lignes par 150 colonnes de microlentilles. Chaque microlentille est alors associée à un ensemble de 100 lignes par 100 colonnes d'éléments sensibles.

Dans un mode particulier de réalisation, l'unité de traitement est agencée pour rechercher, pour chaque séquence de sous-images associée à une microlentille donnée et pour chaque pixel des sous-images considérées, le ou les pixels ayant les vecteurs d'intensité les plus similaires parmi les pixels des séquences de sous-images associées aux microlentilles voisines de la microlentille donnée. Les microlentilles voisines d'une microlentille donnée comprennent au minimum les deux microlentilles adjacentes situées sur la même colonne et sur les lignes inférieure et supérieure, et les deux microlentilles adjacentes situées sur la même ligne et sur les colonnes inférieure et supérieure. Les microlentilles voisines peuvent également comprendre les quatre microlentilles situées sur une ligne inférieure ou supérieure et sur une colonne inférieure ou supérieure. Plus généralement, les microlentilles voisines peuvent comprendre un voisinage de rang P, où P désigne le décalage maximal entre le rang de ligne de la lentille donnée et le rang de ligne de la lentille voisine, et le décalage maximal entre le rang de colonne de la lentille donnée et le rang de colonne de la lentille voisine. Ainsi, un voisinage de rang 2 comprend vingt-quatre microlentilles voisines. Lorsque plusieurs pixels de différentes séquences de sous-images présentent un vecteur d'intensité similaire au pixel considéré, l'ensemble de ces pixels peut être pris en compte.

L'unité de traitement peut en outre être agencée pour déterminer une information de profondeur de chaque élément de surface imagé en fonction des pixels appariés associés audit élément de surface imagé. En particulier, la position respective des éléments sensibles ayant généré les pixels appariés permet, par triangulation, de déterminer une information de distance de l'élément de surface imagé.

L'invention a également pour objet un procédé de détermination du profil tridimensionnel d'une surface comprenant les étapes de :
▪ acquérir une séquence d'images plénoptiques, chaque image plénoptique étant formée d'un ensemble de pixels associés chacun à une intensité lumineuse d'un élément de surface imagé, et comprenant une pluralité de sous-images de la surface selon des angles de vue distincts,
▪ projeter sur la surface une séquence d'images structurées synchronisée avec la séquence d'images plénoptiques, de sorte que chaque élément de surface imagé soit éclairé par une suite d'intensités lumineuses distincte des suites d'intensités lumineuses éclairant les autres éléments de surface imagés,
▪ construire, pour chaque pixel de l'image plénoptique, un vecteur d'intensité représentatif de la suite d'intensités lumineuses de l'élément de surface imagé correspondant au pixel considéré, et
▪ appairer chaque pixel d'une sous-image avec un pixel d'une autre sous-image en fonction d'une similarité de leurs vecteurs d'intensité.

### BRÈVE DESCRIPTION DES DESSINS

D'autres caractéristiques, détails et avantages de l'invention ressortiront à la lecture de la description qui va suivre, donnée uniquement à titre d'exemple et faite en référence aux dessins annexés pour lesquels :
- la figure 1 représente schématiquement un premier exemple de système de détermination du profil tridimensionnel d'une surface selon l'invention ;
- la figure 2 représente schématiquement un deuxième exemple de système de détermination du profil tridimensionnel d'une surface selon l'invention ;
- la figure 3 représente un exemple de procédé de détermination du profil tridimensionnel d'une surface selon l'invention.

### DESCRIPTION DÉTAILLÉE

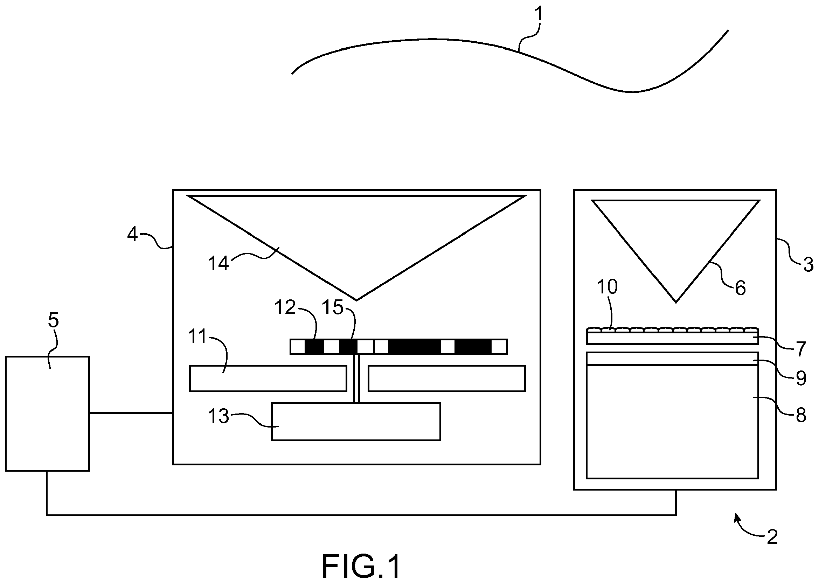

La figure 1 représente schématiquement un premier exemple de système de détermination du profil tridimensionnel d'une surface selon l'invention. La surface dont on souhaite reconstruire le profil tridimensionnel est repérée par la référence 1. Le système 2 comprend une caméra plénoptique 3, un système d'éclairage 4 et une unité de traitement 5.

La caméra plénoptique 3 comporte un objectif optique d'acquisition 6, une matrice de microlentilles 7 et un capteur photosensible 8. L'objectif optique d'acquisition 6 est agencé pour diriger une partie du faisceau lumineux réfléchi par la surface 1 vers la matrice de microlentilles 7. Le capteur photosensible 8 est un capteur plan comprenant un ensemble d'éléments sensibles 9 organisés en matrice. Il comprend par exemple un ensemble formé de 15000 lignes par 15000 colonnes d'éléments sensibles. Le capteur photosensible 8 est par exemple sensible aux longueurs d'onde visibles. Il est au minimum sensible aux longueurs d'onde du faisceau lumineux émis par le système d'éclairage 4. Le capteur photosensible 8 permet ainsi de générer des images plénoptiques formées de 15000 x 15000 pixels, chaque pixel étant représentatif d'une intensité lumineuse émanant de l'élément de surface imagé par ce pixel. La matrice de microlentilles 7 comprend un ensemble de microlentilles 10 également organisées en lignes et en colonnes. Elle comprend par exemple 150 lignes par 150 colonnes de microlentilles. Chaque microlentille 10 est associée à un sous-ensemble indépendant d'éléments sensibles 9. Chaque sous-ensemble est formé par des éléments sensibles contigus, de façon à pouvoir générer une sous-image correspondant à une partie de l'image plénoptique. En l'occurrence, chaque microlentille 10 et chaque sous-ensemble associé d'éléments sensibles 9 est apte à générer une sous-image de 100 lignes par 100 colonnes de pixels. Les microlentilles 10 sont agencées de manière à ce que les différentes sous-images représentent, par morceaux, la surface 1 vue sous différents angles de vue.

Le système d'éclairage 4 comporte une source lumineuse 11, un masque de transmission 12, un moteur 13 et un objectif optique de projection 14. La source lumineuse 11 est agencée pour illuminer de manière homogène le masque de transmission 12. Elle comprend par exemple une matrice de diodes électroluminescentes. De préférence, la source lumineuse 11 émet un faisceau lumineux non cohérent à une seule longueur d'onde, par exemple à 405 nm. Le masque de transmission 12 est formé d'un ensemble de motifs 15 présentant chacun un coefficient de transmission pouvant prendre soit une valeur nulle ou proche de la valeur nulle, soit une valeur unitaire ou proche de la valeur unitaire. Autrement dit, chaque motif 15 est agencé soit pour bloquer soit pour laisser passer le faisceau lumineux émis par la source lumineuse 11. Chaque motif 15 se présente par exemple sous forme d'un carré dont le côté est de 10 µm (micromètres). Le masque de transmission 12 comprend par exemple une plaque opaque dans laquelle des ouvertures sont pratiquées de façon à former une alternance de motifs ouverts et fermés. Les motifs 15 sont par exemple organisés sous forme matricielle. De préférence, ils sont arrangés pour présenter une répartition aléatoire de valeurs du coefficient de transmission. Le moteur 13 est agencé de manière à pouvoir faire tourner le masque de transmission 12 autour d'un axe parallèle à l'axe du faisceau lumineux émis par la source lumineuse 11. Il s'agit par exemple d'un moteur pas à pas. Le moteur 13 est agencé pour placer le masque de transmission 12 dans au moins N positions distinctes, avec N un entier naturel supérieur ou égal à 10. De préférence, N est supérieur ou égal à 100. L'objectif optique de projection 14 est agencé pour focaliser le faisceau lumineux émis par la source lumineuse 11 et filtré par le masque de transmission 12 sur la surface 1. L'objectif optique de projection 14 peut être un objectif télécentrique, afin d'obtenir une importante profondeur de champ. Le système d'éclairage 4 permet ainsi de générer des images dites structurées sur la surface 1, chaque image structurée étant formée par projection des motifs 15 du masque de transmission 12 sur la surface 1. Lorsque les motifs 15 présentent une répartition aléatoire de valeurs du coefficient de transmission, chaque image structurée présente une répartition aléatoire correspondante d'intensité lumineuse.

L'unité de traitement 5 est agencée pour commander de façon synchronisée la caméra plénoptique 3 et le système d'éclairage 4. Elle est agencée pour commander au système d'éclairage 4 la projection successive de N images structurées et pour commander à la caméra plénoptique 3 l'acquisition de N images plénoptiques, synchronisées avec les N images structurées. Chaque image plénoptique est ainsi acquise au cours de la projection d'une image structurée. Dans l'exemple de réalisation de la figure 1, les N images plénoptiques sont obtenues par déplacement du masque de transmission. Ce déplacement est agencé de sorte que chaque élément de surface imagé par la caméra plénoptique 3 soit éclairé par une suite d'intensités lumineuses distincte des suites d'intensités lumineuses éclairant les autres éléments de surface imagés. Ainsi, chaque élément de surface imagé peut être identifié individuellement dans les différentes sous-images des images plénoptiques. À cet effet, l'unité de traitement 5 est agencée pour construire, pour chaque pixel de l'image plénoptique, un vecteur d'intensité représentatif de la suite d'intensités lumineuses de l'élément de surface imagé correspondant au pixel considéré. L'unité de traitement 5 peut en outre être agencée pour appairer chaque pixel d'une sous-image avec un pixel d'une autre sous-image en fonction d'une similarité de leurs vecteurs d'intensité. Différentes méthodes de similarité peuvent être utilisées, par exemple basées sur un taux de corrélation, sur des différences d'intensités au carré ou « squared intensity différences (SD) » en anglais, sur une différence d'intensité absolue ou « absolute intensity différence (AD) » en anglais, ou sur une différence absolue moyenne ou « mean absolute différence (MAD) » en anglais. Enfin, l'unité de traitement 5 peut être agencée pour déterminer une information de profondeur de chaque élément de surface imagé en fonction des pixels appariés associés audit élément de surface imagé. De manière classique, cette information de profondeur peut être obtenue par triangulation.

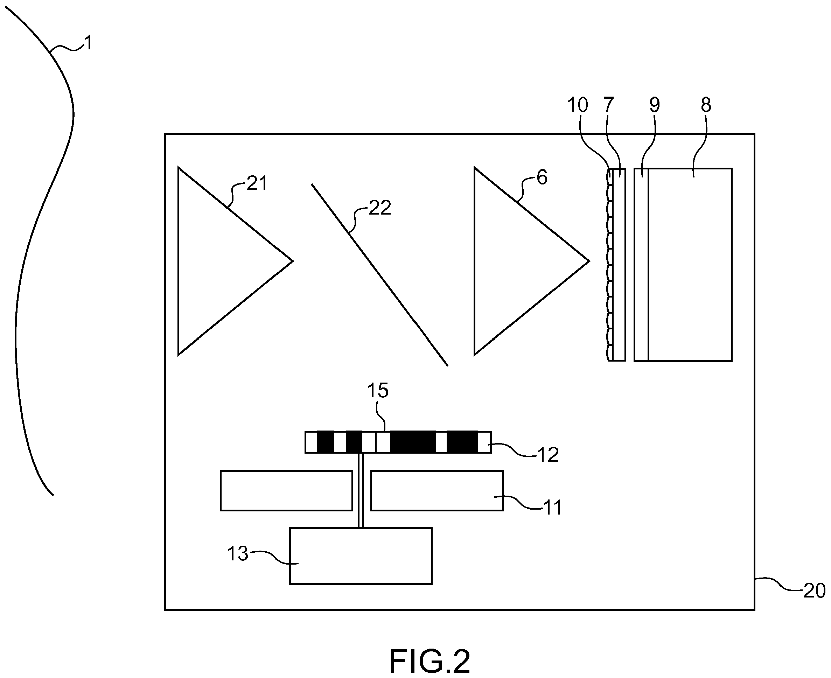

La figure 2 représente schématiquement un deuxième exemple de système de détermination du profil tridimensionnel d'une surface selon l'invention. Le système 20 comprend une caméra plénoptique et un système d'éclairage dans une configuration coaxiale. De manière analogue au système 2 de la figure 1, le système 20 comprend un objectif optique d'acquisition 6, une matrice de microlentilles 7, un capteur photosensible 8, une source lumineuse 11, un masque de transmission 12 et un moteur 13. Il comporte, en outre, un objectif optique commun 21 et une lame séparatrice d'intensité 22. La lame séparatrice d'intensité 22 est agencée, d'une part, pour transmettre une partie du faisceau lumineux issu du masque de transmission 12 en direction de l'objectif optique commun 21 et, d'autre part, pour transmettre une partie du faisceau lumineux émanant de l'objectif optique commun 21 en direction du capteur photosensible 8. Ainsi, les images structurées sont projetées sur la surface 1 selon un axe optique identique à l'axe optique selon lequel les images plénoptiques sont acquises.

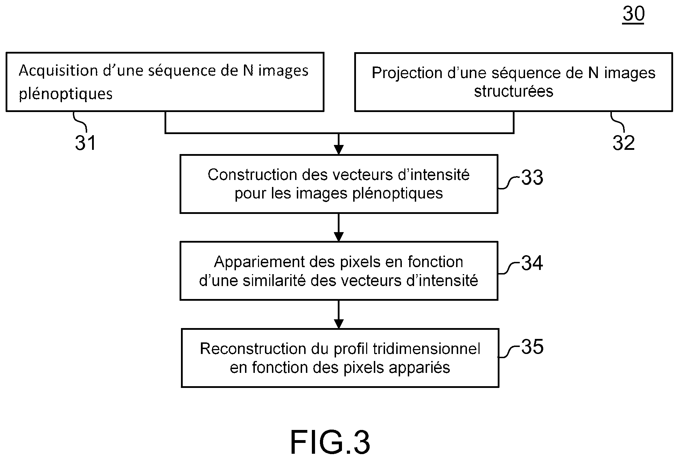

La figure 3 représente un exemple de procédé de détermination du profil tridimensionnel d'une surface selon l'invention. À titre d'illustration, il est considéré que le procédé 30 est mis en oeuvre à l'aide du système 2 de la figure 1. Le procédé 30 comprend une étape 31 d'acquisition d'une séquence de N images plénoptiques, une étape 32 de projection d'une séquence de N images structurées, une étape 33 de construction de vecteurs d'intensité, une étape 34 d'appariement des pixels et une étape 35 de reconstruction du profil tridimensionnel de la surface. L'étape 31 d'acquisition des images plénoptiques, réalisée par la caméra plénoptique 3, et l'étape 32 de projection des images structurées, réalisée par le système d'éclairage 4, sont synchronisées, chaque image plénoptique étant acquise au cours de la projection d'une image structurée correspondante. L'étape 33 de construction des vecteurs d'intensité est réalisée par l'unité de traitement 5. Comme indiqué précédemment, elle consiste à former un vecteur de dimension N pour chaque pixel de l'image plénoptique, contenant les différentes intensités lumineuses quantifiées par l'élément sensible correspondant du capteur photosensible 8. L'étape 34 d'appariement des pixels consiste à rechercher, pour chaque pixel d'une sous-image, le pixel d'une ou plusieurs autres sous-images ayant un vecteur d'intensité identique ou similaire. La recherche est de préférence effectuée parmi les sous-images voisines, c'est-à-dire les sous-images associées à des microlentilles 10 voisines de la microlentille associée à la sous-image considérée. L'étape 35 de reconstruction du profil tridimensionnel consiste à déterminer une information de distance de chaque élément de surface imagé en fonction des pixels appariés correspondant à cet élément de surface imagé. L'information de distance est déterminée selon l'axe optique de la caméra plénoptique 3.

## Revendications

1. Système de détermination du profil tridimensionnel d'une surface comprenant :
▪ une caméra plénoptique (3) agencée pour acquérir une séquence d'images plénoptiques de la surface (1), chaque image plénoptique étant formée d'un ensemble de pixels associés chacun à une intensité lumineuse d'un élément de surface imagé, et comprenant une pluralité de sous-images de la surface selon des angles de vue distincts,
▪ un système d'éclairage (4) agencé pour projeter sur la surface une séquence d'images structurées synchronisée avec la séquence d'images plénoptiques, de sorte que chaque élément de surface imagé soit éclairé par une suite d'intensités lumineuses distincte des suites d'intensités lumineuses éclairant les autres éléments de surface imagés, et
▪ une unité de traitement (5) agencée pour construire, pour chaque pixel de l'image plénoptique, un vecteur d'intensité représentatif de la suite d'intensités lumineuses de l'élément de surface imagé correspondant au pixel considéré, et pour appairer chaque pixel d'une sous-image avec un pixel d'une autre sous-image en fonction d'une similarité de leurs vecteurs d'intensité.

2. Système selon la revendication 1, dans lequel le système d'éclairage (4) est agencé pour que chaque image structurée soit formée d'un ensemble de motifs projetés présentant une répartition aléatoire d'intensité lumineuse.

3. Système selon l'une des revendications 1 et 2, dans lequel le système d'éclairage (4) comporte :
▪ un masque de transmission (12) formé d'un ensemble de motifs (15) présentant chacun un coefficient de transmission pouvant prendre au moins l'une de deux valeurs distinctes, et
▪ une source lumineuse (11) agencée pour éclairer la surface (1) par projection au travers du masque de transmission (12).

4. Système selon la revendication 3, dans lequel le système d'éclairage (4) comporte, en outre, un dispositif de déplacement (13) agencé pour déplacer le masque de transmission (12) et/ou la source lumineuse (11) par rapport à la surface (1), de façon à projeter les différentes images structurées de la séquence.

5. Système selon la revendication 4, dans lequel le dispositif de déplacement comporte :
▪ un support agencé pour recevoir le masque de transmission, et
▪ une platine de positionnement agencée pour déplacer le support selon au moins un axe de rotation ou de translation.

6. Système selon l'une des revendications 4 et 5, dans lequel les motifs (15) du masque de transmission (12) présentent une première dimension selon un premier axe et une deuxième dimension selon un deuxième axe, et le dispositif de déplacement (13) est agencé pour déplacer le masque de transmission (12) et/ou la source lumineuse (11), entre deux images structurées successives, d'un pas de déplacement supérieur ou égal à la plus grande des première et deuxième dimensions.

7. Système selon l'une des revendications 3 à 6, dans lequel chaque motif (15) du masque de transmission (12) comprend des cristaux liquides, le système d'éclairage (4) comportant, en outre, un ensemble d'électrodes agencées de part et d'autre des motifs et une unité de commande agencée pour alimenter les électrodes de façon à contrôler individuellement le coefficient de transmission de chaque motif.

8. Système selon l'une des revendications 3 à 7, dans lequel la source lumineuse (11) est monochromatique.

9. Système selon l'une des revendications 3 à 8, dans lequel la source lumineuse (11) est non cohérente.

10. Système selon l'une des revendications précédentes, dans lequel la caméra plénoptique (3) comporte :
▪ un capteur photosensible (8) comprenant un ensemble d'éléments sensibles (9), et
▪ un ensemble de microlentilles (7), chaque microlentille (10) étant associée à un sous-ensemble d'éléments sensibles (9) du capteur photosensible de façon à ce que chaque sous-ensemble d'éléments sensibles puisse générer une sous-image.

11. Système selon la revendication 10, dans lequel l'unité de traitement (5) est agencée pour rechercher, pour chaque séquence de sous-images associée à une microlentille donnée (10) et pour chaque pixel des sous-images considérées, le pixel ayant le vecteur d'intensité le plus similaire parmi les pixels des séquences de sous-images associées aux microlentilles voisines de la microlentille donnée.

12. Système selon l'une des revendications précédentes, dans lequel l'unité de traitement (5) est en outre agencée pour déterminer une information de profondeur de chaque élément de surface imagé en fonction des pixels appariés associés audit élément de surface imagé.

13. Procédé de détermination du profil tridimensionnel d'une surface comprenant les étapes de :
▪ acquérir (31) une séquence d'images plénoptiques, chaque image plénoptique étant formée d'un ensemble de pixels associés chacun à une intensité lumineuse d'un élément de surface imagé, et comprenant une pluralité de sous-images de la surface selon des angles de vue distincts,
▪ projeter (32) sur la surface une séquence d'images structurées synchronisée avec la séquence d'images plénoptiques, de sorte que chaque élément de surface imagé soit éclairé par une suite d'intensités lumineuses distincte des suites d'intensités lumineuses éclairant les autres éléments de surface imagés,
▪ construire (33), pour chaque pixel de l'image plénoptique, un vecteur d'intensité représentatif de la suite d'intensités lumineuses de l'élément de surface imagé correspondant au pixel considéré, et
▪ appairer (34) chaque pixel d'une sous-image avec un pixel d'une autre sous-image en fonction d'une similarité de leurs vecteurs d'intensité.

## Patentansprüche

1. System zur Bestimmung des dreidimensionalen Profils einer Oberfläche, umfassend:
- eine plenoptische Kamera (3), die angeordnet ist, um eine Sequenz von plenoptischen Bildern der Oberfläche (1) zu erfassen, wobei jedes plenoptische Bild aus einer Gruppe von Pixeln gebildet ist, die jeweils einer Lichtintensität eines abgebildeten Oberflächenelements zugeordnet sind, und eine Vielzahl von Teilbildern der Oberfläche aus unterschiedlichen Betrachtungswinkeln umfassend,
- ein Beleuchtungssystem (4), das angeordnet ist, um eine strukturierte Bildsequenz auf die Oberfläche zu projizieren, die mit der plenoptischen Bildsequenz synchronisiert ist, so dass jedes abgebildete Oberflächenelement von einer Lichtintensitätsabfolge beleuchtet wird, die sich von den Lichtintensitätsabfolgen unterscheidet, die die anderen abgebildeten Oberflächenelemente beleuchten, und
- eine Verarbeitungseinheit (5), die angeordnet ist, um für jedes Pixel des plenoptischen Bildes einen Intensitätsvektor zu konstruieren, der für die Lichtintensitätsabfolge des abgebildeten Oberflächenelements, das dem berücksichtigten Pixel entspricht, repräsentativ ist, und um jeden Pixel eines Teilbildes mit einem Pixel eines anderen Teilbildes abzustimmen, in Abhängigkeit von einer Ähnlichkeit ihrer Intensitätsvektoren.

2. System nach Anspruch 1, wobei das Beleuchtungssystem (4) so angeordnet ist, dass jedes strukturierte Bild aus einer Gruppe projizierter Motive gebildet wird, die eine zufällige Verteilung der Lichtintensität aufweisen.

3. System nach einem der Ansprüche 1 und 2, wobei das Beleuchtungssystem (4) beinhaltet:
- eine Übertragungsmaske (12), die aus einer Gruppe von Motiven (15) gebildet ist, die jeweils einen Übertragungskoeffizienten aufweisen, der mindestens einen von zwei unterschiedlichen Werten annehmen kann, und
- eine Lichtquelle (11), die angeordnet ist, um die Oberfläche (1) durch Projektion durch die Übertragungsmaske (12) zu beleuchten.

4. System nach Anspruch 3, wobei das Beleuchtungssystem (4) ferner eine Verschiebungsvorrichtung (13) beinhaltet, die angeordnet ist, um die Übertragungsmaske (12) und/oder die Lichtquelle (11) relativ zur Oberfläche (1) zu verschieben, um die verschiedenen strukturierten Bilder der Sequenz zu projizieren.

5. System nach Anspruch 4, wobei die Verschiebungsvorrichtung beinhaltet:
- eine Halterung, die angeordnet ist, um die Übertragungsmaske aufzunehmen, und
- eine Positionierungsplatte, die angeordnet ist, um die Halterung entlang mindestens einer Rotations- oder Translationsachse zu verschieben.

6. System nach einem der Ansprüche 4 und 5, wobei die Motive (15) der Übertragungsmaske (12) eine erste Dimension entlang einer ersten Achse und eine zweite Dimension entlang einer zweiten Achse aufweisen, und die Verschiebungsvorrichtung (13) angeordnet ist, um die Übertragungsmaske (12) und/oder die Lichtquelle (11) zwischen zwei aufeinanderfolgenden strukturierten Bildern mit einem Verschiebungsschritt zu verschieben, der größer oder gleich der größten der ersten und zweiten Dimension ist.

7. System nach einem der Ansprüche 3 bis 6, wobei jedes Motiv (15) der Übertragungsmaske (12) Flüssigkristalle umfasst, wobei das Beleuchtungssystem (4) ferner eine Gruppe von Elektroden beinhaltet, die auf beiden Seiten der Motive angeordnet sind, und eine Steuereinheit, die angeordnet ist, um die Elektroden zu versorgen, um den Übertragungskoeffizienten jedes Motivs individuell zu steuern.

8. System nach einem der Ansprüche 3 bis 7, wobei die Lichtquelle (11) monochromatisch ist.

9. System nach einem der Ansprüche 3 bis 8, wobei die Lichtquelle (11) nicht kohärent ist.

10. System nach einem der vorhergehenden Ansprüche, wobei die plenoptische Kamera (3) beinhaltet:
- einen lichtempfindlichen Sensor (8), eine Gruppe von empfindlichen Elementen (9) umfassend, und
- eine Gruppe von Mikrolinsen (7), wobei jede Mikrolinse (10) einer Teilgruppe von empfindlichen Elementen (9) des lichtempfindlichen Sensors zugeordnet ist, so dass jede Teilgruppe von empfindlichen Elementen ein Teilbild generieren kann.

11. System nach Anspruch 10, wobei die Verarbeitungseinheit (5) angeordnet ist, um für jede Sequenz Teilbilder zu suchen, die einer gegebenen Mikrolinse (10) zugeordnet sind, und für jedes Pixel berücksichtigte Teilbilder, wobei das Pixel den ähnlichsten Intensitätsvektor unter den Pixeln der Sequenzen der Teilbilder hat, die den benachbarten Mikrolinsen der gegebenen Mikrolinse zugeordnet sind.

12. System nach einem der vorhergehenden Ansprüche, wobei die Verarbeitungseinheit (5) ferner angeordnet ist, um eine Information der Tiefe jedes abgebildeten Oberflächenelements zu bestimmen, in Abhängigkeit von den abgestimmten Pixeln, die dem abgebildeten Oberflächenelement zugeordnet sind.

13. Verfahren zur Bestimmung des dreidimensionalen Profils einer Oberfläche, die Schritte umfassend zum:
- Erfassen (31) einer Sequenz von plenoptischen Bildern, wobei jedes plenoptische Bild aus einer Gruppe von Pixeln gebildet ist, die jeweils einer Lichtintensität eines abgebildeten Oberflächenelements zugeordnet sind, und eine Vielzahl von Teilbildern der Oberfläche aus unterschiedlichen Betrachtungswinkeln umfassend,
- Projizieren (32) auf die Oberfläche einer strukturierten Bildsequenz, die mit der plenoptischen Bildsequenz synchronisiert ist, so dass jedes abgebildete Oberflächenelement von einer Lichtintensitätsabfolge beleuchtet wird, die sich von den Lichtintensitätsabfolgen unterscheidet, die die anderen abgebildeten Oberflächenelemente beleuchten,
- Konstruieren (33), für jedes Pixel des plenoptischen Bildes, eines Intensitätsvektors, der für die Lichtintensitätsabfolge des abgebildeten Oberflächenelements, das dem berücksichtigten Pixel entspricht, repräsentativ ist, und
- Abstimmen (34) jedes Pixels eines Teilbildes mit einem Pixel eines anderen Teilbildes, in Abhängigkeit von einer Ähnlichkeit ihrer Intensitätsvektoren.

## Claims

1. System for determining the three-dimensional profile of a surface comprising:
- a plenoptic camera (3) arranged to acquire a sequence of plenoptic images of the surface (1), each plenoptic image being formed by a set of pixels which are each associated with a light intensity of an imaged surface element, and comprising a plurality of sub-images of the surface from different viewing angles,
- a lighting system (4) arranged to project, onto the surface, a sequence of structured images which is synchronised with the sequence of plenoptic images, so that each imaged surface element is illuminated by a succession of light intensities which is different from the successions of light intensities which illuminate the other imaged surface elements, and
- a processing unit (5) arranged to construct, for each pixel of the plenoptic image, an intensity vector which represents the succession of light intensities of the imaged surface element corresponding to the pixel in question, and to match each pixel of a sub-image with a pixel of another sub-image as a function of a similarity between the intensity vectors thereof.

2. System according to claim 1, wherein the lighting system (4) is arranged so that each structured image is formed by a set of projected patterns having a random light intensity distribution.

3. System according to one of claims 1 and 2, wherein the lighting system (4) includes:
- a transmission mask (12) formed by a set of patterns (15) each having a transmittance that can take at least one of two different values, and
- a light source (11) arranged to illuminate the surface (1) by projection through the transmission mask (12).

4. System according to claim 3, wherein the lighting system (4) further includes a displacement device (13) arranged to displace the transmission mask (12) and/or the light source (11) relative to the surface (1), so as to project the different structured images of the sequence.

5. System according to claim 4, wherein the displacement device includes:
- a support arranged to receive the transmission mask, and
- a positioning plate arranged to displace the support along at least one axis of rotation or translation.

6. System according to one of claims 4 and 5, wherein the patterns (15) of the transmission mask (12) have a first dimension along a first axis and a second dimension along a second axis, and the displacement device (13) is arranged to displace the transmission mask (12) and/or the light source (11), between two successive structured images, by a displacement step greater than or equal to the greater of the first and second dimensions.

7. System according to one of claims 3 to 6, wherein each pattern (15) of the transmission mask (12) comprises liquid crystals, the lighting system (4) further including a set of electrodes arranged on either side of the patterns and a control unit arranged to supply power to the electrodes so as to individually control the transmittance of each pattern.

8. System according to one of claims 3 to 7, wherein the light source (11) is monochromatic.

9. System according to one of claims 3 to 8, wherein the light source (11) is noncoherent.

10. System according to one of the preceding claims, wherein the plenoptic camera (3) includes:
- a photosensor (8) comprising a set of sensing elements (9), and
- a set of microlenses (7), each microlens (10) being associated with a subset of sensing elements (9) of the photosensor such that each subset of sensing elements can generate a sub-image.

11. System according to claim 10, wherein the processing unit (5) is arranged to search, for each sequence of sub-images associated with a given microlens (10) and for each pixel of the sub-images considered, the pixel having the most similar intensity vector from among the pixels of the sequences of sub-images associated with the neighbouring microlenses of the given microlens.

12. System according to one of the preceding claims, wherein the processing unit (5) is further arranged to determine depth information for each imaged surface element as a function of the matched pixels associated with said imaged surface element.

13. Method for determining the three-dimensional profile of a surface comprising the steps of:
- acquiring (31) a sequence of plenoptic images, each plenoptic image being formed by a set of pixels which are each associated with a light intensity of an imaged surface element, and comprising a plurality of sub-images of the surface from different viewing angles,
- projecting (32), onto the surface, a sequence of structured images which is synchronised with the sequence of plenoptic images, so that each imaged surface element is illuminated by a succession of light intensities which is different from the successions of light intensities which illuminate the other imaged surface elements,
- constructing (33), for each pixel of the plenoptic image, an intensity vector which represents the succession of light intensities of the imaged surface element corresponding to the pixel in question, and
- matching (34) each pixel of a sub-image with a pixel of another sub-image as a function of a similarity between the intensity vectors thereof.
